# EUROPEAN PATENT APPLICATION

(11) **EP 0 747 722 A2**
(43) Date of publication of application: **11.12.1996**
(21) Application number: 96108818.4
(22) Date of filing: 02.06.1996
(51) Int. Cl.: G01S 7/02, G01S 13/86

(54) **Threat radar detection using flash correlation of radar and radar warning receiver data**

(30) Priority: 06.06.1995 US 469259
(71) Applicant: HE HOLDINGS, INC. dba HUGHES ELECTRONICS, Los Angeles, CA 90045-0066 (US)
(72) Inventor: Oxford, Stephen C., Los Angeles, California 90066 (US); Popoli, Robert F., Rancho Palos Verdes, California 90275 (US)
(74) Representative: Steil, Christian, Dipl.-Ing.

(57) **Abstract**

Multi-sensor correlation apparatus (10) and methods (30) for flash correlating data derived from a radar (13) and a radar warning receiver (14) to more accurately determine the direction to a threat radar (12) that emits a reflection beam in the same direction as its transmit beam. Data association is performed by comparing the intercept timing of the main transmission lobe of the threat radar (12) as observed by the radar warning receiver (14) with the intercept timing of the main reflection lobe of the threat radar (12) observed by the radar (13). The radar apparatus (10) comprises the radar (13) for detecting the reflection bean, and the radar warning receiver (14) for simultaneously detecting the transmit beam. A flash correlator (15) detects the time coincidence of the two detection events and correlates radar data generated by the radar (13) and the radar warning receiver (14) using the time coincidence detection. More specifically, the radar (13) is caused to look for a range Doppler cell that consistently jumps in magnitude at the same time the radar warning receiver (14) detects the transmission main lobe intercept of the threat radar (12). Thus, the radar (13) is cued to look for a reflection lobe at the same time the radar warning receiver (14) detects a transmission lobe.

## Description

### BACKGROUND

This invention relates generally to correlators, and more particularly, to flash correlation techniques for correlating data derived from radars and radar warning receivers to more accurately determine the direction of a threat radar.

Conventional data correlation techniques relies on a statistical test that compares commonly measured or estimated features. Typically for radar to radar warning receiver correlation, angle of arrival is used as the commonly observed feature. The disadvantages of the conventional data correlation techniques are elucidated by considering its weakness in both air-to-air and air-to-ground applications.

In an air-to-air application, both the radar and the radar warning receiver will generally be able to make angle measurements of the target. Unfortunately, given the measurement accuracy of typical airborne radar and radar warning receivers relative to typical target spacings, any association in multiple target environments is statistically highly ambiguous. As a result of this high ambiguity in multi-target environments, there is a high probability that any associations made based on angle will be incorrect. This highly incorrect association probability renders the main motive for integrating a radar and radar warning receiver (two sources of target identification) nearly useless.

In an air-to-ground application, the conventional data correlation techniques is even less effective. The radar provides little information about small nonmoving ground targets. Generally, the radar cannot provide for automated detection of such targets. The best that the radar can do is provide synthetic aperture radar (SAR) maps to an operator who would then attempt to manually recognize the existence of the target. For small targets, such a procedure is impractical. Alternatively, software might be involved to automatically recognize targets. However, such software is to computationally demanding and inherently unreliable to be of use in current fighters. Although a radar warning receiver can easily detect the presence of ground targets that are actively emitting, it cannot provide accurate enough angle or range information to allow the use of low cost munitions. Since range and angle information derived from the radar warning receiver is relatively poor compared with SAR map resolution, the conventional data correlation technique does not allow the use of radar warning receiver information as a cue to effectively improve radar detection.

In multi-target environments, data association is critical to making full use of sensor data. Data correlation or association is the process of determining whether a sensor's current observation is the result of detecting a target that was previously or concurrently detected by this or another sensor. If no association is apparent, the tracking system should conclude the potential existence of a new target. If an associated track is apparent, the tracking system should update whatever record was previously held for that target. If sensor reports are not correlated, significant loss in understanding of the true tactical situation results. If sensor reports are incorrectly correlated, significantly erroneous conclusions about the true tactical situation will result.

Accordingly, it is an objective of the present invention to provide for a flash correlation technique for correlating data derived from a radar and a radar warning receiver to more accurately determine the direction of a threat radar. It is a further objective of the present invention to provide for a flash correlation technique that uses the main transmission and main reflection lobes to determine the direction of a threat radar and which is ultimately used as a correlation feature to cue the radar.

### SUMMARY OF THE INVENTION

To meet the above and other objectives, the present invention provides for a technique for correlating sensor data collected by a radar with sensor data collected by a radar warning receiver. In contrast to conventional data correlation techniques, the present invention uses two different features, namely, the main transmission and main reflection lobes of the threat radar, to determine the pointing direction of the threat antenna which is ultimately used as a correlation feature. The association procedure of the present invention cues the radar to provide for greatly improved detection. The radar is preferably used to look for a range Doppler cell that consistently jumps in magnitude at the same time the radar warning receiver detects the threat radar's transmission main lobe
intercept. Thus the radar is preferably cued to look for a reflection lobe at the same time the radar warning receiver detects a transmission lobe.

The present technique is particularly applicable against either airborne or ground based scanning threat radars that place a strong reflection lobe (at the radar's operating frequency) in the direction in which the threat radar is currently transmitting. The technique has applicability to a wide range of threats as evidenced by the following. Almost all current ground based threat radars and many airborne threat radars employ mechanically scanned antennas. The operation of these threat radars typically entail periods of scanning. Furthermore, threat radars do not generally have very narrow band radomes. Thus under normal operating conditions, many threats would have a strong reflection lobe that is detectable by the radar.

The novel concept of the present invention is to perform data association by comparing the intercept timing of the main transmission lobe of the threat radar as observed by the radar warning receiver with the intercept timing of the main reflection lobe of the threat radar observed by the radar. This differs from standard approaches that generally attempt to associate sensor reports based on commonly observed features. Typically, kinematic related features such as angle of arrival for airborne threats and derived positional information for ground-based threats are employed in conventional systems as discussed in the Background section.

The embodiment of the present invention entails providing a mechanism for coordinating the collection schedules of the radar warning receiver and the radar, and signal processing for the radar to detect and identify the threat radar reflection lobe. A typical radar warning receiver detects the threat radar main lobe.

The present invention may be used as a correlation technique for two specific applications, including an air-to-ground weapon delivery and an air-to-air dual source identification. Given current typical operating parameters of airborne radars and airborne radar warning receivers, these two tactical techniques are virtually impossible without the use of the present invention.

In the case of ground-based threats, the present invention allows for more reliable weapon delivery on threats with less expensive weapons than are typically used. Currently, ground-based air defenses are often attacked using relatively expensive anti-radiation missiles. In addition to their expense, these weapons may be ineffective against an intermittently transmitting the threat radar. The embodiment of the present invention for ground-based threats entails the addition of signal processing to the radar that allows it to detect and assess the position of the threat radar in a cued (from the radar warning receiver) fashion. This allows the radar to reliably detect the threat radar and accurately assess its position. Without the cued operation, the radar
would have little chance of directly detecting the threat radar in an automated way (at best a synthetic aperture ground map would be viewed by an operator in hopes of recognizing the threat). With the present invention, the radar is able to cooperate with the radar warning receiver to automatically detect and localize ground threats for the delivery of relatively inexpensive GPS guided munitions, for example.

In the case of airborne threats, the present invention allows for reliable dual independent sensor identification of aircraft. The tactical advantage in terms of reduced fratricide and the ability to launch beyond visual range is enormous. Without the technique, the radar warning receiver tracks cannot be reliably placed on the radar tactical display due to the relatively poor positional information provided by the radar warning receiver. Thus, the present invention leads to better operator situation awareness by allowing identification information from the radar warning receiver to be assigned to radar tracks on the radar's tactical display. If the radar also provides identification information on the targets, then the invention provides for dual source identification. In short, for closely spaced targets, the probability of correctly associating a radar warning receiver identification to a radar identified threat (i.e., dual source identification) is greatly improved using the correlation technique of the present invention.

Thus, the present invention provides the ability to collect and correlate data between the radar and the radar warning receiver sensors despite conditions that would completely thwart the data association and radar detection capabilities using conventional techniques.

### BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:
Fig. 1 illustrates radar apparatus employing a flash correlation technique in accordance with the principles of the present invention; and
Fig. 2 is a flow chart illustrating a flash correlation method in accordance with the present invention.

### DETAILED DESCRIPTION

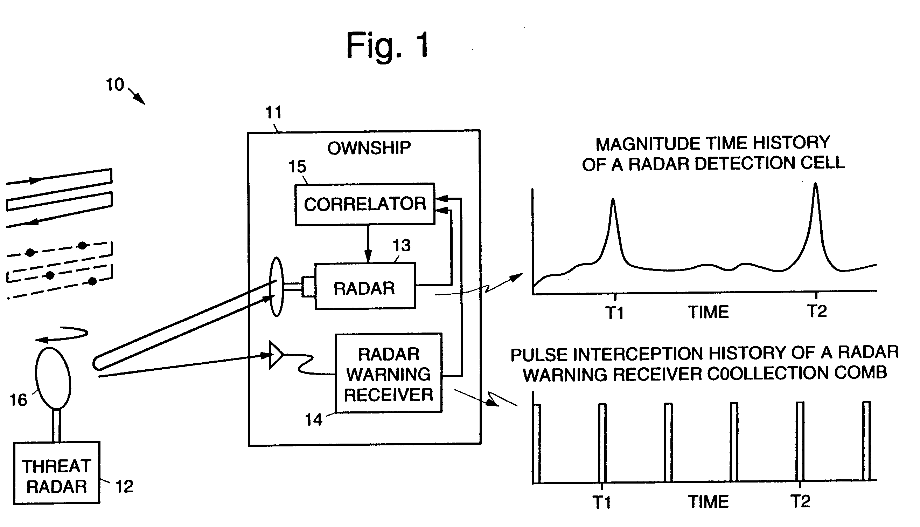

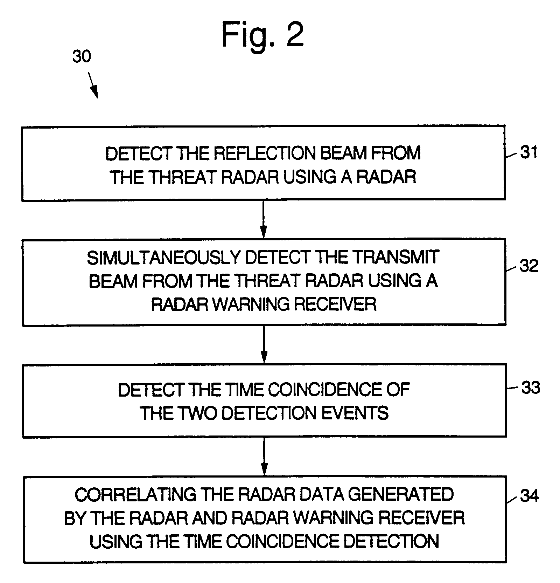

Referring to the drawing figures, Fig. 1 illustrates multi-sensor apparatus 10 employing flash correlation apparatus 15 and method 30 (Fig. 2) in accordance with the principles of the present invention for determining the direction to a threat radar 12 that emits a reflection beam in the same direction as its transmit beam. The flash correlation apparatus 15 in the multi-sensor apparatus 10 shown in Fig. 1 correlates sensor reports from a radar 13 and a radar warning receiver 14 based on intercept time of main reflection and transmit lobes from the threat radar 12. The flash correlation apparatus 15, the radar 13, and the radar warning receiver 14 are disposed on a vehicle 11, such as an aircraft 11, that is observed by the threat radar 12. The threat radar 12 uses a scanning, revisiting or rotating antenna 16.

Flash correlation is a technique for forming and associating concurrent radar 13 and radar warning receiver 14 sensor reports. The importance of flash correlation therefore must be viewed from two important aspects, including a reliable radar warning receiver 14 and radar 13 association technique, and a radar detection technique for stationary emitters.

The present flash correlation technique can very reliably associate the concurrent observations from the radar 13 and the radar warning receiver 14 much better than standard angle only nearest neighbor techniques. The process allows for a fused radar 13 and radar warning receiver 14 observation that combines superior kinematic capability of the radar 13 with the generally superior identification capability of the radar warning receiver 14. Furthermore, the improved kinematic capability of the fused observation then improves the performance of standard association processing of the fused observation with previous track files.

The flash correlation technique provides a method by which ones own radar 13 can detect stationary emitters. This feature represents a significant tactical advantage, since radar detection of stationary emitters is typically made impossible by the presence of competing clutter. In essence, the present flash correlation technique allows the radar warning receiver 14 to aid the detection processing of the radar 13.

In order to better understand the present invention, the following terminology will be used in this description. The threat radar 12 is an enemy radar whose location and existence is to be determined. The threat radar 12 may be airborne or ground based. The radar 13 and the radar warning receiver 14 are used to collect information about the threat radar 12. The vehicle 11 is a platform on which the radar 13 and the radar warning receiver 14 are located.

The present invention relies on the fact that many threat radars 12 cast a strong reflection lobe in the same direction that they place their transmit beams. The crux of the present invention is to use the radar 13 to detect the reflection beam while simultaneously using the radar warning receiver 14 to detect the transmit beam. The time coincidence of these detection events is used to correlate the data between the two sensors.

In general, non-typical processing must be added to the radar 13 to monitor each detection cell for the occurrence of strong jumps in signal strength that result from the increased threat radar cross-section that occurs when the main reflection lobe hits the vehicle 11. The exact nature of this processing depends on the specific application of the flash correlation technique.

In general, the radar warning receiver is already set up to detect the main transmit beam intercept of the threat radar 12. Typical radar warning receiver 14 data collection for scanning threats calls for the radar warning receiver 14 to collect data according to what may be referred to as a collection comb.

A typical collection comb is also illustrated in Fig. 1. It is comprised of a set of "looks" which are a function of the anticipated dwell and revisit time of the threat radar 12, and the number of pulses the radar warning receiver 14 requires to identify the threat radar 12. The idea is to set up a look schedule which guarantees the interception of the threats main transmit beam. The sensitivity and antenna gain of typical airborne radar warning receivers 14 is such that only the transitions of the main beam of the threat radar 12 are detected.

Given the ability of the radar 13 to detect the main reflection beam of the threat radar 12 and the ability of the radar warning receiver 14 to detect the main transmit beam of the threat radar 12, observations made by each sensor can be associated based on the time at which the detection events occur.

The domain of applicability of the present flash correlation apparatus 15 and technique is outline below. The threat radar 12 must have certain features in relation to the features of the radar 13 and the radar warning receiver 14 for the present invention to be applicable.

The present invention works against both ground-based and airborne targets that cast a strong reflection beam in the same direction that they point their main transmit beam. The threat radar 12 must place a distinguishable main beam on the vehicle 11. This implies that the threat radar 12 must preferably have a sufficiently narrow transmit beam and operate in a manner such that its time on the vehicle 11 results in two distinguishable states (distinguishable by the radar warning receiver 14) corresponding to when the threat radar 12 is and is not illuminating the vehicle 11. Most threat radars 12 (that have directional antennas) and do not operate in a single target track mode meet this requirement.

The transmit beam must be detectable by the radar warning receiver 14. This requirement, regularly, has two basic implications. The threat radar 12 should operate within the bandwidth of the radar warning receiver 14, and the radar warning receiver 14 should have sufficient sensitivity to detect the direct radar 12. A typical airborne radar
warning receiver 14 would meet this requirement against almost all threat radars 12, which are close enough to present a danger to the pilot.

The threat radar 12 must place a distinguishable reflection beam on the vehicle 11. This requirement generally implies that threat radar 12 is a mechanically scanned type that does not operate in single target track mode. The reflection beam from the threat radar 12 must be detectable by the radar 13. This requirement has, regularly, several related implications. The threat radar 12 should either operate in the band of the radar 13 or must meet the following out-of band conditions. The threat radar 12 should not have a narrow band radome which would interfere with radar transmissions. The threat radar 12 should not operate in a band that is far below the operating band of the radar 13 and have a large aperture so that its reflection lobe in the radar's band is significantly narrower than the transmit beam of the threat radar 12. Note that even for in-band threat radars 12, it is important that the aperture of the threat radar 12 is not so large so as to cause its reflection lobe to be significantly more narrow than its transmit lobe. Conversely, the threat radar 12 should not be so far above the operating band of the radar 13 and have so small an aperture that it does not have a sufficiently large radar crosssection reflection lobe or that the lobe is so wide as to make the main lobe time on target indistinguishable. Most airborne and ground based threat radars 12 that employ mechanically scanned antenna structures and do not operate in a single target track mode would fit the required criterion.

For the purposes of completeness, Fig. 2 is a flow chart illustrating a preferred embodiment of the flash correlation method 30 in accordance with the present invention. The method 30 determines the direction to a threat radar 12 that emits a reflection beam in the same direction as its transmit beam. The method 30 comprises the following steps. A radar 13 is used to detect the reflection beam from the threat radar 12, indicated in step 31. A radar warning receiver 14 simultaneously detects the transmit beam from the threat radar 12, indicated in step 32. The time coincidence of the two detection events is detected, indicated in step 33. Radar data generated by the radar 13 and radar warning receiver 14 is correlated using the time coincidence detection, indicated in step 34. Thus, flash correlating apparatus and methods for correlating data derived from a radar and a radar warning receiver have been disclosed. It is to be understood that the described embodiments are merely illustrative of some of the many specific embodiments which represent applications of the principles of the present invention. Clearly, numerous and other arrangements can be readily devised by those skilled in the art without departing from the scope of the invention.

## Claims

1. Multi-sensor apparatus (10) for determining the direction to a threat radar (12) that emits a reflection beam in the same direction as its transmit beam, said apparatus (10) comprising:
a radar (13) for detecting the reflection beam from the threat radar (12);
a radar warning receiver (14) for simultaneously detecting the transmit beam from the threat radar (12),
characterized by
a flash correlator (15) for detecting the time coincidence (T₁, T₂) of the two detection events and for correlating radar data generated by the radar (13) and the radar warning receiver (14) using the time coincidence detection.

2. The apparatus of claim 1, characterized in that the radar (13) processes radar data derived from the threat radar (12) and determines a range Doppler cell that consistently jumps in magnitude at the same time the radar warning receiver (14) detects the transmission main lobe intercept of the threat radar (12).

3. The apparatus of claim 1 or 2, characterized in that the radar (13) is cued to look for a reflection lobe from the threat radar (12) at the same time the radar warning receiver (14) detects a transmission lobe from the threat radar (12).

4. A method (30) of determing the direction to a threat radar (12) that emits a reflection beam in the same direction as its transmit beam, said method (30) comprising the steps of:
using (31) a radar (13) to detect the reflection beam from the threat radar (12);
simultaneously using (32) a radar warning receiver (14) to detect the transmit beam from the threat radar (12);
characterized by the steps of
detecting (33) the time coincidence of the two detection events; and
correlating (34) radar data generated by the radar (13) and the radar warning receiver (14) using the time coincidence detection.

5. The method of claim 4, characterized in that the radar (13) is caused to look tor a range Doppler cell that consistently jumps in magnitude at the same time the radar warning receiver (14) detects the transmission main lobe intercept from the threat radar (12).

6. The method of claim 4 or claim 5, characterized in that the radar (13) is cued to look tor a reflection lobe from the thread radar (12) at the same time the radar warning receiver (14) detects a transmission lobe from the threat radar (12).
